# EUROPEAN PATENT SPECIFICATION

(11) **EP 2 193 981 B1**
(45) Date of publication and mention of the grant of the patent: **22.02.2012**
(21) Application number: 09176169.2
(22) Date of filing: 17.11.2009
(51) Int. Cl.: B62D 25/16

(54) **Mudguard suspension strut**
Schutzblechaufhängungsstrebe
Jambe de force de suspension de garde-boue

(30) Priority: 01.12.2008 SE 0802507
(43) Date of publication of application: 09.06.2010
(73) Proprietor: Scania CV AB (publ), 151 87 Södertälje (SE)
(72) Inventor: Wentzel, Henrik, 113 33, Stockholm (SE); Torstensson, Niklas, 126 47, Hägersten (SE); Österlöf, Richard, 183 51, Täby (SE); Tjeder, Caroline, 112 24, Stockholm (SE); Henriksson, Ola, 137 94, Norra Sorunda (SE)

(56) References cited:
- EP-A- 0 411 342
- GB-A- 2 151 569
- US-A- 4 377 294

## Description

### Technical field

The invention relates to a strut for suspension of a mudguard close to a wheel belonging to a vehicle according to claim 1.

The invention relates also to a vehicle comprising one or more struts and which accords to claim 13.

### Background

Most vehicles provided with some type of wheels for travelling on roads are provided with mudguards to limit the amount of mud, snow, water or the like which splash from the wheels when the vehicle is in motion, and hence to protect the vehicle and the surroundings from exposure.

Mudguards and suspension devices for mudguards are subject to considerable loads in that in addition to their own weight mudguards may periodically be coated with a great deal of mud, snow or ice which markedly increase the total weight of the mudguard and hence the load on its suspension. Travel motion of the vehicle also causes vibrations which may over time result in damage to the suspension device owing to fatigue of constituent parts of the device.

There are a number of different alternative struts for suspension of mudguards. A commonly occurring solution described in US-A-4 377 294 comprises a strut fastened to the vehicle's load-bearing framework and directed horizontally sideways according to the preamble features of claim 1. The mudguard is fastened to the strut by mountings appropriate to the purpose.

This fastening of struts to the framework tends, however, to fail because of the moment which occurs in the fastening to the framework in combination with the vibrations which occur during use.

There is therefore a need for a suspension strut which increases the reliability of the mudguard's suspension.

### Summary of the invention

The object of the present invention is to eliminate the above problems. This object is achieved by a strut for suspension of a mudguard belonging to a vehicle according to the characterising features of independent claim 1.

The problems described above are solved by the fact that the clamping force between the surfaces close to the respective section gives rise to a normal force between the various parts. This normal force itself results in friction between the abutment surfaces and in consequently movable fastening of the sections relative to one another. When the strut is subjected to vibrations during use of the vehicle, this movable fastening allows small relative movements between the sections in that the abutment surfaces slide relative to one another, thereby damping the vibrations in the strut.

The clamping force and hence the friction force are adapted on the basis of the geometry of the sections and the expected load on the strut so that the desired relative movement between the parts is achieved by the abutment surfaces sliding relative to one another. The movable fastening allows stall relative movements, of up to about 1 mm, between the parts which abut against one another, and results in the desired damping effect on the vibrations generated in the vehicle and parts belonging to it during use, thereby markedly increasing the durability of the strut, its fastening and the vehicle's framework.

Irrespective of how its movable fastening is configured, the strut is provided with a mechanical locking device which prevents the sections from parting from one another if the clamping force ceases. The mechanical locking increases the strut's reliability in that it prevents the constituent parts from releasing one another and sliding off the first section and/or the second section if for any reason the device which provides the clamping force breaks down. Without the mechanical locking, the mudguard might become detached from the vehicle's framework.

The mechanical locking device takes with advantage the form of one or more spigots arranged on the sleeve or the larger-radius section and pointing inwards, and a recess or aperture arranged in the section or sections and so located that the spigot is placed in the recess or aperture when the sleeve and the section are placed in intended positions relative to one another such as to result in mechanical connecting together and locking of the parts. The spigot is preferably arranged somewhat resiliently to facilitate the connecting together of the spigot and the recess or aperture. This mechanical locking must nevertheless allow the desired relative movements between the sleeve and the section or sections which result in the damping effect. This scope for movement may for example be achieved by a certain play between the pin and the recess or aperture. The locking device described above might also be configured vice versa so that the inner section has spigots pointing radially outwards and the outer section or the sleeve is provided with corresponding recesses or apertures.

In an embodiment of the strut, the first and second sections are of tubular cross-section and so dimensioned that the outside diameter of one section is substantially the same as the inside diameter of the other section, whereby the narrower section is pushed into the section which has the larger inside diameter. This embodiment means that the strut comprises fewer parts and is easy to assemble.

In the above embodiment, the clamping force is generated by a strap placed round the larger-diameter section where the sections overlap one another. The strap is tensioned round the section to generate a clamping force between the sections. The strap exerts a clamping force directed radially inwards so that the necessary friction force is generated between the outer surface of the smaller-diameter section and the inner surface of the larger-diameter section, thus providing the desired mobility in the strut.

In the above embodiment, the larger-diameter section is provided, at the end where the strap is placed, with at least one substantially longitudinally directed notch. This at least one notch makes it easier to achieve sufficient clamping force on the smaller-diameter section in that the notch facilitates deformation of the larger-diameter section by the clamping force from the strap. A plurality of notches makes it easier to achieve the desired clamping force, so two, four or more notches may in certain cases be advantageous.

In another embodiment of the strut, the clamping force is generated by the smaller-diameter section being provided, at the end where the sections are intended to overlap one another, with a region of larger diameter than the inside diameter of the surrounding section, so that the clamping force is generated when the smaller-diameter section is pushed into the second section. This embodiment has few parts and there is little risk of the clamping force being lost because of some constituent part breaking or becoming detached.

Another embodiment of the strut comprises a sleeve so arranged as to substantially surround the first section's end which points away from the fastening in the vehicle's frame, and the second section's end which points away from its fastening in the mudguard, and thus to connect the first and second sections to said strut. An advantage of this embodiment is that the two sections have the same diameter, which may be an advantage in the manufacture, dimensioning and configuration of the constituent parts of the strut.

In an embodiment of the strut, the sleeve is movably fastened to the elongate section which is intended to be fastened in the vehicle's framework. This embodiment is advantageous in that the damping effect is greatest if the movable fastening is situated near to the strut's fastening in the vehicle's framework, and this location of the movable fastening minimises the distance between the first section's fastening in the framework and the movable fastening. The sleeve should however not abut against the framework, since that might hinder or reduce the mobility of the fastening.

In an embodiment of the strut, the sleeve is movably fastened to the first and second sections. This embodiment is advantageous if, for example, large vibrations are expected to occur in the strut and the associated mudguard in that this embodiment comprises two movable fastenings and hence also vibration damping at two points along the strut.

In an embodiment of the strut, the sleeve is fastened to the second section which is fastened in the mudguard by a welded connection. If sufficient damping is achieved with one movable fastening, the sleeve is fastened at the other end permanently to the second section. A reliable way which is advantageous in terms of manufacturing technology is to use a welded connection, which may be situated at an appropriate location. Other types of permanent fastening such as threaded connections are also conceivable solutions.

In an embodiment of the strut, a clamping force is generated between the sleeve and the section or sections by using a strap placed round the sleeve where the sleeve overlaps the section or sections. The two ends of the strap are angled so that they point radially outwards and a threaded connection is so situated that it extends through apertures in the two ends and hence makes it possible to adjust the tightness of the strap. The strap is somewhat shorter than the circumference of the sleeve, to make it possible to tension the strap. Using a strap makes it easy to fit and adjust the strap and the strut.

In an embodiment of the strut, the sleeve and the respective first and second sections take the form of pipes whereby the inside diameter of the sleeve corresponds to the outside diameters of the sections. An embodiment comprising tubular sections is relatively easy to make and rolled shapes have good flexural strength. In addition, a tubular sleeve is suitable for use in combination with the strap in that the clamping force from the strap is distributed round the periphery of the sleeve.

In an embodiment of the strut, the end of the sleeve where the strap is placed is provided with at least one substantially longitudinally directed notch. This at least one notch makes it easier to achieve sufficient clamping force on the section in the sleeve in that the notch facilitates deformation of the sleeve under the strap. More notches make it easier to achieve desired clamping force, so two, four or more notches may in certain cases be advantageous.

### Brief description of the drawings

The invention is explained in more detail below with reference to the embodiments of the invention depicted in the drawings, in which:
- Figure 1: depicts in perspective the strut according to the invention;
- Figure 2: depicts in perspective the section of the strut which is intended to be fastened in the vehicle's framework;
- Figure 3: depicts in perspective a sleeve belonging to the strut;
- Figure 4: depicts a schematic view of a second embodiment of the invention;
- Figure 5: depicts a schematic view of a third embodiment of the invention.

### Detailed description of the invention

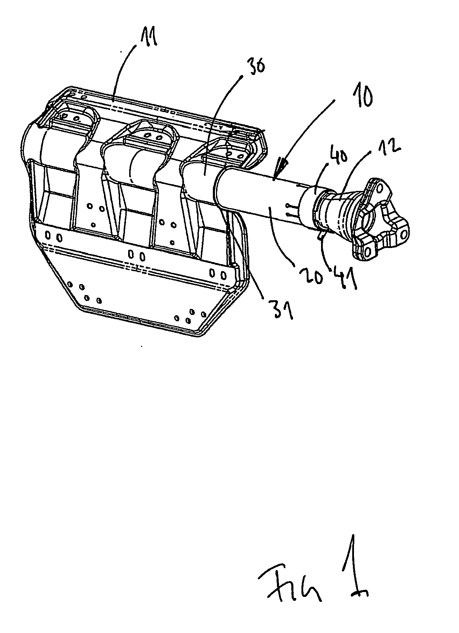

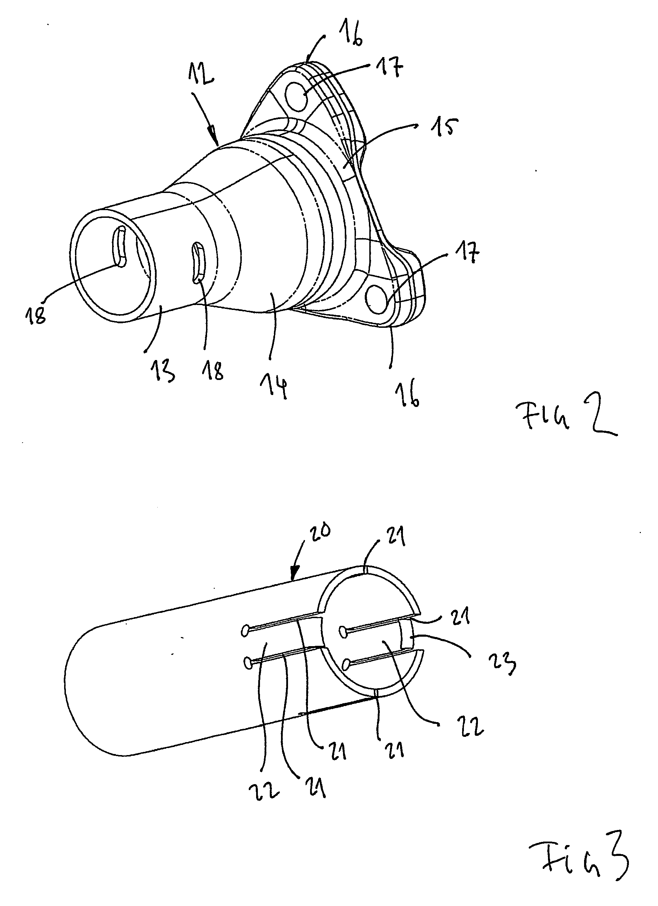

Figure 1 depicts a strut 10 used for suspension of an undepicted mudguard, and Figures 2 and 3 depict constituent parts of the strut 10. The strut 10 is fastened in the mudguard by means of a fastening plate 11 for good stability and durability of the fastening. A mudguard is usually provided for each of the vehicle's wheels, and one or more struts 10 are then used for each mudguard.

The strut 10 comprises a first section 12 substantially in the form of a tubular element 13. The tubular element 13 changes to a conical portion 14 in order to increase the flexural strength of the section 12 near to its edge 15 close to the fastening in the vehicle's undepicted framework. The edge 15 is provided with three flanges 16 which point radially away from the longitudinal axis of the section and are intended to abut against the vehicle framework. Each flange 16 has a hole 17 running through it for fastening by, for example, threaded connections or rivets to the vehicle's framework. The number of flanges may be varied or they may be replaced by, for example, an annular flange with a number of holes. The section 12 is also provided with two recesses 18 situated in the tubular element 13 on opposite sides of the element 13 and usually has a diameter of between 20 and 100 mm.

A sleeve 20 is placed round the tubular element 13 belonging to the section 12. The sleeve 20 has a tubular cross-section in which the inside diameter of the sleeve is substantially the same as the outside diameter of the tubular section 13. The material thickness of the sleeve will depend on the desired strength, At the end of the sleeve 20 which overlaps the section 12 a number of, but preferably six, notches 21 extend from the edge of the sleeve in the longitudinal direction of the sleeve. These notches facilitate deformation of the sleeve 20 in the radial direction when a clamping force is applied in a radial direction in towards the longitudinal axis of the sleeve and of the strut, so that the sleeve 20 is fastened movably to the first section 12 by the friction which occurs between the abutment surfaces of the sleeve 20 and of the section 12.

In the embodiment depicted in Figures 1 to 3, two notches 21 are arranged close to one another on each side of the sleeve 20 so that there is between the notches 21 an elongate pipe portion 22 which is provided at the end with a spigot 23 projecting radially inwards. These spigots 23 are intended, when the sleeve 20 is placed in position surrounding the first section 12, to penetrate into the respective recesses 18 in the first section and thereby mechanically lock the sleeve 20 to the section 12 if for any reason the clamping force round the end of the sleeve 20 ceases. There has nevertheless to be between the spigots 23 and the abutment surface at the end of the surface 18 a certain play in order not to prevent the desired movements in the movable fastening of the sleeve relative to the first section 12.

The strut also comprises a second section 30 which extends from the mudguard to the sleeve 20 and into the sleeve 20. The end of the first section 12 and the end of the second section 30 respectively point towards one another and are situated in the sleeve 20 but have nevertheless always to be kept apart in order not to risk limitations in the desired movable fastening of the first section 12 relative to the sleeve 20. As the movable fastening of the first section 12 relative to the sleeve 20 is preferably situated relatively near to the fastening of the strut 10 in the framework, the result is that the length of the second section 30 will be such that the mudguard is in a desired position relative to the vehicle's wheel. The second section 30 likewise has in this embodiment a tubular cross-section whose outside diameter corresponds substantially to the inside diameter of the sleeve 20 for stable and reliable fastening of the second section 30 relative to the sleeve 20. When the second section 30 is inserted to the position intended for it in the sleeve 20, it is fixed by a welded connection 31 round the end of the sleeve.

The strut 10 also comprises a device for generating a clamping force on the sleeve 20. In this embodiment, it takes the form of a strap 40 placed round the end of the sleeve 20 which is provided with the notches 21 and which points towards the first section 12. The strap is for example a metal strip whose ends are angled radially outwards and are each provided with a hole through which a tensioning screw 41 runs. When the tensioning screw 41 is turned, the ends of the strap 40 are pressed together and a force is applied radially inwards round the circumference of the sleeve 20. The end of the sleeve 20 is then somewhat deformed, whereby the sleeve is pressed against the end of the first section 12. The normal force from the first section 12 against the inside of the sleeve 20 then gives rise to friction between the abutment surfaces which holds the sleeve 20 in position relative to the first section 12. This fastening does however allow small movements between the sleeve 20 and the first section 12, with a consequent damping effect on the vibrations which occur in the strut during use of the vehicle. The movements are of the order of up to about 1 mm. This means that the necessary play between the spigots 23 and recesses 18 should be not less than the desired movement in the fastening.

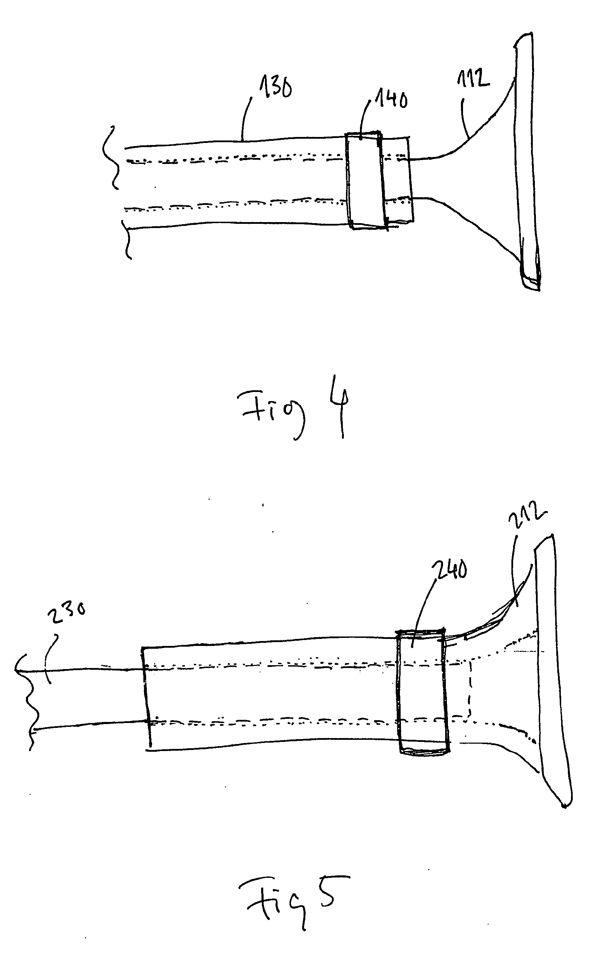

Figure 4 depicts a second embodiment of the strut in which the first section (112) takes the form of a pipe section of smaller diameter than the pipe section which constitutes the second section (130). The outside diameter of the first section (112) is substantially the same as the inside diameter of the second section (130) and the second section (130) is pushed onto the first section (112). The clamping force is here provided by a strap (140) arranged round the periphery, and near to the end, of the second section. This embodiment is with advantage likewise provided with notches to facilitate deformation of the second section (130).

Figure 5 depicts a third embodiment of the strut in which the first section (212) takes the form of a pipe section of larger diameter than the pipe section which constitutes the second section (230). The inside diameter of the first section (212) is substantially the same as the outside diameter of the second section (230) and the second section (230) is inserted into the first section (212). The clamping force is here provided by a strap (240) arranged round the periphery of the first section near to the latter's end which is intended to be fastened to the vehicle's framework. This embodiment is with advantage likewise provided with notches to facilitate deformation of the second section (230). These notches must nevertheless extend into and past the strap if a maximum effect is to be achieved.

The invention is described above on the basis of three embodiments. However, a number of modifications are conceivable:
- The sleeve and the respective first and second sections need not be tubular shapes, as other shapes, eg L section profiles, are also conceivable alternative.
- The strut may also be provided with more movable fastenings if more damping is desired. An alternative then is to provide also at the other end of the sleeve a rather similar solution to that explained above and depicted.

- Generating a clamping force may also be achieved by an expanding device placed in the first and/ or second section. The notches intended to facilitate deformation will then be arranged instead in the first section so that it can be deformed outwards and thereby be pressed against the inside of the sleeve. Alternatively, the sleeve or the section is pre-deformed in such a way that a portion of the sleeve has a reduced inside diameter or a portion of the section is of larger diameter and the sleeve and the section or sections are thereafter pushed together so that the necessary clamping force is provided.
- The strap may have some other configuration, manufacturing material and tensioning device.

Although the invention is described above on the basis of some exemplifying embodiments, it is not limited to them but is defined on the basis of the accompanying claims.

## Claims

1. A strut (10) for suspension of a mudguard for a wheel belonging to a vehicle, which strut (10) comprises:
- a first section (12; 112; 212), one end of which is intended to be fastened in the vehicle's load-bearing framework;
- a second section (30; 130; 230), one end of which is intended to be fastened in the mudguard;
which first section (12; 112; 212) and second section (30; 130; 230) are arranged in such a way relative to one another that a clamping force is generated between the surfaces close to the respective sections which abut against one another so that the sections (12; 112, 212; 30; 130; 230) are thereby kept movably fastened relative to one another by the friction which occurs between the surfaces which abut against one another, **characterised in that** the sections (12;30) which are kept fastened movably relative to one another are provided with a mechanical locking device (18,23) which prevents the sections (12;30) from being released from one another if the clamping force ceases, and that this locking device has a sufficiently great built-in clearance not to limit the strut's movable fastening or fastenings.

2. A strut according to claim 1, **characterised in that** the first section (112; 212) and the second section (130; 230) are of tubular cross-section and so dimensioned that the outside diameter of one section is substantially the same as the inside diameter of the other section, the narrower section being pushed into the section which has the larger inside diameter.

3. A strut according to claim 2, **characterised in that** the clamping force is generated by a strap (140; 240) arranged round the larger-diameter section where the sections overlap one another, in order to generate the clamping force between the sections.

4. A strut according to claim 3, **characterised in that** the larger-diameter section is provided, at the end where the strap is placed, with at least one substantially longitudinally directed notch.

5. A strut according to claim 2, **characterised in that** the clamping force is generated by the smaller-diameter section being provided, at the end where the sections overlap one another, with a region of larger diameter than the inside diameter of the surrounding section and that the smaller-diameter section is pushed into the other section so that the region of larger diameter gives rise to the clamping force.

6. A strut according to claim 1, **characterised in that** it also comprises a sleeve (20) so arranged that it substantially surrounds the end (13) of the first section (12) which points away from the fastening in the vehicle's frame, and the end of the second section (30) which points away from its fastening in the mudguard, and thereby connects the first section (12) and the second section (30) to said strut (10).

7. The strut according to claim 6, **characterised in that** the sleeve (20) is fastened movably to the first section (12) which is intended to be fastened in the vehicle's framework.

8. The strut according to claim 6, **characterised in that** the sleeve is fastened movably to the first section (12) and the second section (30).

9. The strut according to claim 7, **characterised in that** the sleeve (20) is fastened to the second section (30) by a welded connection (31).

10. The strut according to any one of claims 6 to 9, **characterised in that** the clamping force is generated by arranging one or more straps (40) round the sleeve (20) where the sleeve (20) overlaps the section or sections.

11. The strut according to any one of claims 6 to 10, **characterised in that** the sleeve (20) and the first section (12) and the second section (30) respectively take the form of tubular sections whereby the inside diameter of the sleeve (20) coincides with the outside diameters of the sections.

12. The strut according to claim 11, **characterised in that** the end or ends of the sleeve (20) where straps (40) are placed is/are provided with at least one substantially longitudinally directed notch (21).

13. A vehicle comprising one or more wheels and at least one strut according to any one of claims 1-12 for suspension of a mudguard close to one or more wheels.

## Patentansprüche

1. Strebe (10) zur Aufhängung eines Spritzschutzes für ein zu einem Fahrzeug gehörendes Rad, wobei die Strebe (10) umfasst:
- einen ersten Abschnitt (12; 112; 212), von welchem ein Ende am lasttragenden Fahrzeugrahmen zu befestigen ist;
- einen zweiten Abschnitt (30; 130; 230), von weichem ein Ende am Spritzschutz zu befestigen ist;
wobei der erste Abschnitt (12; 112; 212) und der zweite Abschnitt (30; 130; 230) derart relativ zueinander angeordnet sind, dass eine Klemmkraft zwischen den aneinander anllegenden Oberflächen nahe den jewelligen Abschnitten erzeugt wird, so dass die Abschnitte (12; 112; 212; 30; 130; 230) dabei durch die Relbkraft, die zwischen den anelnander anllegenden Oberflächen auftritt, beweglich relativ zueinander festgehalten werden,
**dadurch gekennzeichnet, dass** die Abschnitte (12; 30), welche relativ zueinander beweglich festgehalten werden, mit einer mechanischen Verriegelungsvorrichtung (18; 23) versehen werden, welche verhindert, dass sich die Abschnitte (12; 30) voneinander lösen, wenn die Klemmkraft nachlässt, und dass diese Verriegelungsvorrichtung ausreichend großen Einbausplelraum hat, um nicht die bewegliche(n) Befestigung(en) der Strebe einzuschränken.

2. Strebe (10) nach Anspruch 1,
**dadurch gekennzeichnet, dass** der erste Abschnitt (112; 212) und der zweite Abschnitt (130; 230) einen röhrenförmigen Querschnitt aufweisen und so dimensioniert sind, dass der Außendurchmesser eines Abschnitts im Wesentlichen derselbe ist wie der Innendurchmesser des anderen Abschnitts, wobei der schmälere Abschnitt in den Abschnitt, welcher den größeren Innendurchmesser aufweist, hineingedrückt ist.

3. Strebe nach Anspruch 2,
**dadurch gekennzeichnet, dass** die Klemmkraft durch einen Bügel (140; 240) erzeugt wird, welcher um den Abschnitt mit dem größeren Durchmesser herum angebracht ist, wo die Abschnitte sich gegenseitig überlappen, um die Klemmkraft zwischen den Abschnitten zu erzeugen.

4. Strebe nach Anspruch 3,
**dadurch gekennzeichnet, dass** der Abschnitt mit dem größeren Durchmesser an dem Ende, wo der Bügel angeordnet ist, mit mindestens einem Im Wesentlichen längs gerichteten Einschnitt versehen ist.

5. Strebe nach Anspruch 2,
**dadurch gekennzeichnet, dass** die Klemmkraft durch den Abschnitt mit dem kleineren Durchmesser erzeugt wird, der an dem Ende, wo die Abschnitte sich gegenseitig überlappen, mit einem Bereich größeren Durchmessers als der Innendurchmesser des umgebenden Abschnitts versehen ist und dass der Abschnitt mit dem kleineren Durchmesser in den anderen Abschnitt hineingedrückt ist, so dass der Bereich größeren Durchmessers die Klemmkraft bewirkt.

6. Strebe nach Anspruch 1,
**dadurch gekennzeichnet, dass** sie auch eine Hülse (20) umfasst, welche so angebracht ist, dass sie im Wesentlichen das Ende (13) des ersten Abschnitts (12) umgibt, welches von der Befestigung am Fahrzeugrahmen wegzeigt, und das Ende des zweiten Abschnitts (30), welches von seiner Befestigung am Spritzschutz wegzeigt, und dabei den ersten Abschnitt (12) und den zweiten Abschnitt (30) mit genannter Strebe (10) verbindet.

7. Strebe nach Anspruch 6,
**dadurch gekennzeichnet, dass** die Hülse (20) beweglich an dem ersten Abschnitt (12) befestigt ist, weicher am Fahrzeugrahmen zu befestigen ist.

8. Strebe nach Anspruch 6,
**dadurch gekennzeichnet, dass** die Hülse beweglich an dem ersten Abschnitt (12) und an dem zweiten Abschnitt (30) befestigt ist.

9. Strebe nach Anspruch 7,
**dadurch gekennzeichnet, dass** die Hülse (20) an dem zweiten Abschnitt (30) durch eine Schweißverbindung (31) befestigt ist.

10. Strebe nach einem der Anspruche 6 bis 9,
**dadurch gekennzeichnet, dass** die Klemmkraft durch Anordnen eines oder mehrerer Bügel(s) (40) um die Hülse (20) herum erzeugt wird, wo die Hülse (20) den Abschnitt oder die Abschnitte überlappt.

11. Strebe nach einem der Ansprüche 6 bis 10,
**dadurch gekennzeichnet, dass** die Hülse (20), der erste Abschnitt (12) und der zweite Abschnitt (30) jeweils die Form von röhrenförmigen Abschnitten aufweisen, wobei der Innendurchmesser der Hülse (20) mit den Außendurchmessern der Abschnitte übereinstimmt.

12. Strebe nach Anspruch 11,
**dadurch gekennzeichnet, dass** das Ende oder die Enden der Hülse (20), wo Bügel (40) angeordnet sind, mit mindestens einem im Wesentlichen längs gerichteten Einschnitt vorgesehen ist/sind.

13. Fahrzeug umfassend ein oder mehrere Räder und mindestens eine Strebe gemäß einem der Ansprüche 1 bis 12 zur Aufhängung eines Spritzschutzes nahe eines oder mehrerer Räder.

## Revendications

1. Jambe de force (10) pour suspension d'un garde-boue d'une roue appartenant à un véhicule, laquelle jambe de force (10) comprend :
- une première section (12; 112; 212), dont une extrémité est destinée à être fixée dans l'ossature porteuse de charge du véhicule;
- une seconde section (30; 130; 230), dont une extrémité est destinée à être fixée dans le garde-boue;
lesquelles première section (12; 112; 212) et seconde section (30; 130; 230) sont agencées l'une par rapport à l'autre de façon à produire une force de serrage entre les surfaces proches des sections respectives qui viennent en butée l'une contre l'autre de sorte que les sections (12; 112, 212; 30; 130; 230) sont ainsi maintenues fixées de façon mobile l'une par rapport à l'autre par le frottement qui s'opère entre les surfaces venant mutuellement en butée,
**caractérisée en ce que** les sections (12; 30) qui sont maintenues fixées de façon mobile l'une par rapport à l'autre sont pourvues d'un dispositif de verrouillage mécanique (18, 23) qui empêche les sections (12, 30) d'être désolidarisées l'une de l'autre si la force de serrage cesse, et **en ce que** ce dispositif de verrouillage comporte un jeu interne suffisamment important pour ne pas limiter la fixation ou les fixations mobiles de la jambe de force.

2. Jambe de force selon la revendication 1, **caractérisée en ce que** la première section (112; 212) et la seconde section (130; 230) ont une section transversale tubulaire et sont dimensionnées de façon que le diamètre extérieur d'une section soit sensiblement identique au diamètre intérieur de l'autre section, la section plus étroite étant poussée dans la section ayant le plus grand diamètre intérieur.

3. Jambe de force selon la revendication 2, **caractérisée en ce que** la force de serrage est générée par une sangle (140, 240) disposée autour de la section de plus grand diamètre, à l'endroit où les sections se chevauchent mutuellement, afin de générer la force de serrage entre les sections.

4. Jambe de force selon la revendication 3, **caractérisée en ce que** la section de plus grand diamètre est pourvue, à l'extrémité où est placée la sangle, d'au moins une encoche orientée de manière sensiblement longitudinale.

5. Jambe de force selon la revendication 2, **caractérisée en ce que** la force de serrage est générée par le fait que la section de plus petit diamètre est pourvue, à l'extrémité où les sections se chevauchent mutuellement, d'une région d'un diamètre plus grand que le diamètre intérieur de la section qui l'entoure et **en ce que** la section de plus petit diamètre est poussée dans l'autre section de sorte que la région de plus grand diamètre donne naissance à la force de serrage.

6. Jambe de force selon la revendication 1, **caractérisée en ce qu'**elle comprend également un manchon (20) disposé de façon à entourer sensiblement l'extrémité (13) de la première section (12) qui est dirigée à l'opposé de la fixation dans le châssis du véhicule, et l'extrémité de la seconde section (30) qui est dirigée à l'opposé de sa fixation dans le garde-boue, et ainsi relier la première section (12) et la seconde section (30) à ladite jambe de force (10).

7. Jambe de force selon la revendication 6, **caractérisée en ce que** le manchon (20) est fixé de manière mobile à la première section (12) destinée à être fixée dans l'ossature du véhicule.

8. Jambe de force selon la revendication 6, **caractérisée en ce que** le manchon est fixé de manière mobile à la première section (12) et à la seconde section (30).

9. Jambe de force selon la revendication 7, **caractérisée en ce que** le manchon (20) est fixé à la seconde section (30) par un raccord soudé (31).

10. Jambe de force selon l'une quelconque des revendications 6 à 9, **caractérisée en ce que** la force de serrage est générée par l'agencement d'une ou plusieurs sangles (40) autour du manchon (20) à l'endroit où le manchon (20) chevauche la section ou les sections.

11. Jambe de force selon l'une quelconque des revendications 6 à 10, **caractérisée en ce que** le manchon (20) et la première section (12) et la seconde section (30) prennent respectivement la forme de sections tubulaires, le diamètre intérieur du manchon (20) coïncidant ainsi avec les diamètres extérieurs des sections.

12. Jambe de force selon la revendication 11, **caractérisée en ce que** l'extrémité ou les extrémités du manchon (20) où sont placées les sangles (40) est/sont pourvue(s) d'au moins une encoche orientée de manière sensiblement longitudinale.

13. Véhicule comprenant une ou plusieurs roues et au moins une jambe de force selon l'une quelconque des revendications 1 à 12 pour la suspension d'un garde-boue à proximité d'une ou plusieurs roues.
